# EUROPÄISCHE PATENTANMELDUNG

(11) **EP 2 927 698 A1**
(43) Veröffentlichungstag der Anmeldung: **07.10.2015**
(21) Anmeldenummer: 15158132.9
(22) Anmeldetag: 09.03.2015
(51) Int. Cl.: G01P 15/08, G01P 15/13

(54) **MESSVORRICHTUNG, HERSTELLUNGSVERFAHREN ZUM HERSTELLEN EINER MESSVORRICHTUNG UND VERFAHREN ZUM BETREIBEN EINER MESSVORRICHTUNG**

(30) Priorität: 31.03.2014 DE 102014206067
(71) Anmelder: ROBERT BOSCH GMBH, 70442 Stuttgart (DE)
(72) Erfinder: Lutz, Theresa, 68163 Mannheim (DE); Hernandez Guillen, Francisco, 70178 Stuttgart (DE); Heuck, Friedjof, 70197 Stuttgart (DE); Preiss, Elisabeth, 70186 Stuttgart (DE)

(57) **Zusammenfassung**

Die Erfindung betrifft eine Messvorrichtung (100) zum Messen einer physikalischen Größe. Die Messvorrichtung (100) umfasst ein Messelement (102), das ein elektrisch leitfähiges Material aufweist, eine Sensiermasse (104), die zumindest teilweise ein elektrisch leitfähiges Material aufweist, wobei die Sensiermasse (104) ausgebildet ist, um ansprechend auf eine Krafteinwirkung relativ zu dem Messelement (102) bewegt zu werden, und eine Auswerteeinheit, die ausgebildet ist, um unter Verwendung eines von einer Position des Messelements (102) gegenüber der Sensiermasse (104) und/oder von einem elektrischen Stromfluss durch das Messelement (102) abhängigen Tunnelstroms (108) eine physikalische Größe der Krafteinwirkung auf die Sensiermasse (104) zu bestimmen.

## Beschreibung

### Stand der Technik

Die vorliegende Erfindung bezieht sich auf eine Messvorrichtung, auf ein Herstellungsverfahren zum Herstellen einer Messvorrichtung sowie auf ein Verfahren zum Betreiben einer Messvorrichtung und ein entsprechendes Computerprogramm.

Kommerziell erhältliche Drehratesensoren basieren hauptsächlich auf kapazitiver Auswertung des Messsignals. Weitere Betrachtungen laufen in Richtung piezoresistiv oder piezoelektrisch. Erste Publikationen zum Thema Tunnel Inertialsensoren sind veröffentlicht worden. Die US 8347720 B2 offenbart einen Beschleunigungssensor auf der Basis eines Arrays von Rastertunnelmikroskop-Spitzen.

### Offenbarung der Erfindung

Vor diesem Hintergrund werden mit dem hier vorgestellten Ansatz eine Messvorrichtung, ein Herstellungsverfahren zum Herstellen einer Messvorrichtung, weiterhin ein Verfahren zum Betreiben einer Messvorrichtung sowie ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Eine Messvorrichtung, z. B. ein Inertialsensor, die unter Verwendung eines elektrischen Stroms bzw. Tunnelstroms als Regelgröße arbeitet, kann sich durch eine vorteilhaft erhöhte Sensitivität zum Erfassen kleinster Beschleunigungen und/oder Drehraten auszeichnen. Beschleunigungs- und Drehratensensoren werden im Weiteren zusammenfassend als Inertialsensoren bezeichnet.

Gemäß dem hier vorgestellten Konzept können von einer Fläche eines Inertialsensors unabhängige Auswerte-Messprinzipien ohne Weiteres angewandt werden. Damit kann dem u. a. auch wegen höherer Funktionsintegration anhaltenden Miniaturisierungstrend ohne Funktionseinbußen Rechnung getragen werden.

Ein typischer Beschleunigungssensor besteht im Wesentlichen aus einer in vorzugsweise eine Richtung frei beweglich gelagerten trägen Sensormasse, welche über ein Federsystem an das Gehäuse angebunden ist. Im Ruhezustand, gibt es somit an einer vorher definierten Stellen einen wohldefinierten Abstand zwischen dem mit dem Gehäuse fest verbunden Teil des Sensors und der beweglichen Masse. Eine Beschleunigung des Gehäuses führt zu einer Kraft auf die träge Masse welche durch die Rückstellkraft des Federsystems zu einer definierten Abstandsänderung zwischen Gehäuse und Sensormasse führt. Diese Abstandänderung ist damit ein Maß der Beschleunigung und muss über eine geeignete abstandssensitive Auswerteeinheit ausgelesen werden, wie z.B. über die hier vorgeschlagene Einheit welche auf dem Tunnelstrom basiert. Die Auswerteeinheit wird in diesem Fall mit dem fixierten Teil, an das Gehäuse, montiert und misst den Abstand zur beweglichen trägen Masse.

Ein typischer Drehratensensor kann auf der Basis eines Coriolis-Drehratensensor funktionieren. Hierbei wird auf einen Beschleunigungssensor zurückgegriffen, welcher insofern erweitert wird, dass er in einen Rahmen gesetzt, der wohldefiniert angetrieben werden kann. Tritt nun eine Drehrate orthogonal zur Antriebsrichtung auf, so wirkt eine Kraft auf die träge Masse des Beschleunigungssensors welche orthogonal zur Achse der Drehrate und orthogonal zu Antriebsrichtung ist und welche durch den Beschleunigungssensor ausgelesen werden kann. Die Auswerteeinheit kann in diesem Fall, entweder in den angetriebenen Rahmen gesetzt werden und misst den Abstand zur beweglichen trägen Masse, oder an den fixierten Teil und misst dabei ggf. beide Bewegungen, die Antriebsbewegung und die aus der Drehrate resultierende Bewegung der trägen Masse.

Mit dem hierin vorgeschlagenen Konzept der Verwendung des extrem abstandssensitiven Tunnelstroms als Regelgröße können neuartige disruptive Auswerte- und Messvorrichtungen realisiert werden, die zum einen extrem kleinbauend und flächenunabhängig sind und zum anderen eine extrem hohe Sensitivität aufweisen. Hierbei wird auf den quantenmechanischen Effekt des Tunnelns zurückgegriffen, welcher sich in Abständen von sehr viel kleiner als1nm, typischerweise in der Größenordnung von ca. 0,5 nm, bemerkbar macht. Hierbei, können durch moderate Spannung kleiner 10 V, typischerweise in der Größenordnung von 5 V, Tunnelströme in der Größenordnung von 1 pA bis 1 nA erzeugt werden.

Heutzutage werden Inertialsensoren meistens kapazitiv ausgelesen. Für einen gleichen Beitrag zum Signal- zu Rausch-Verhältnis werden ca. 3 mal so große Flächen für die kapazitive Auswertung, Flächen der Kondensatoren, benötigt als für das thermomechanische Rauschen der trägen Sensormasse. Wobei die Gesamtmassefläche eines 3 Achsigen Drehratensensors um die 0,5 mm² beträgt. Dies bietet für flächenunabhängige Auswertungen, wie die des Tunnelstroms, einen attraktiven Ansatzpunkt die Sensorfläche zu minimieren. Mit einem Einsatz der vorgeschlagenen Messvorrichtungen, beispielsweise in Form von MEMS (Mikro-Elektro-Mechanische-System)-Sensoren, kann in Anwendungsbereiche vorgedrungen werden, die bisher aufgrund der unzureichenden Sensitivität verschlossen waren. Dies ist möglich, sobald die freigewordene Fläche der kapazitiven Auslesung in eine effektivere Flächennutzung als Masse umgewandelt wird, welches das Rauschverhalten des Sensors verbessert. Damit ist die Limitierung des Signal zu Rauschens allein durch die Masse gegeben und nicht mehr durch das Auswertekonzept.

Äußerst vorteilhaft ist auch die hierin vorgestellte Verwendung von elektrischem Strom als Regelgröße in der vorgeschlagenen Messvorrichtung, da es sich bei elektrischem Strom um eine Erhaltungsgröße handelt.

Es wird eine Messvorrichtung zum Messen einer physikalischen Größe vorgestellt, wobei die Messvorrichtung die folgenden Merkmale aufweist: ein Messelement, das ein elektrisch leitfähiges Material aufweist;
eine Sensiermasse, die zumindest teilweise ein elektrisch leitfähiges Material aufweist, wobei die Sensiermasse ausgebildet ist, um ansprechend auf eine Krafteinwirkung relativ zu dem Messelement bewegt zu werden; und
eine Auswerteeinheit, die ausgebildet ist, um unter Verwendung eines von einer Position des Messelements gegenüber der Sensiermasse und/oder von einem elektrischen Stromfluss durch das Messelement abhängigen Tunnelstroms (Größenordnung von 1 nA) eine physikalische Größe der Krafteinwirkung auf die Sensiermasse zu bestimmen.

Bei der Messvorrichtung kann es sich um einen Sensor wie beispielsweise einen Inertialsensor oder Drehratensensor handeln. Entsprechend kann die zu messende physikalische Größe eine Beschleunigung oder Drehrate repräsentieren. Bei dem elektrisch leitfähigen Material kann es sich um eine elektrisch leitfähige Beschichtung auf dem Messelement und/oder der Sensiermasse handeln. Die Sensiermasse kann verglichen mit dem Messelement eine größere Masse und/oder ein größeres Volumen aufweisen und so in einem Gehäuse der Messvorrichtung angeordnet sein, dass sie ansprechend auf die auf sie einwirkende Krafteinwirkung relativ zu dem Messelement in einer linearen und/oder Drehbewegung verschoben werden kann. Das Messelement kann bewegbar oder nicht bewegbar gegenüber der Sensiermasse gelagert sein. Das Messelement kann ausgebildet sein, um im Zusammenwirken mit der Bewegung der Sensiermasse eine Änderung der Position und/oder eines elektrischen Stromflusses durch einen zugeordneten elektrischen Leiter zu erfahren und damit eine Regelgröße des Tunnelstroms so zu beeinflussen, dass die physikalische Größe der Krafteinwirkung auf die Sensiermasse bestimmt werden kann. Ein zur Erzeugung des Tunnelstroms erforderlicher Nichtleiter zwischen dem Messelement und der Sensiermasse kann durch eine vordefinierte Beabstandung des Messelements von der Sensiermasse oder durch eine zwischen dem Messelement und der Sensiermasse angeordnete Isolationsschicht bereitgestellt sein.

Gemäß einer Ausführungsform der Messvorrichtung kann die Sensiermasse einen dem Messelement zugewandten Vorsprung aufweisen. Der Vorsprung kann die Form einer Wölbung oder Ausbuchtung der Sensiermasse haben. Insbesondere kann der Vorsprung ausgebildet sein, um eine vordefinierte Bahn des Tunnelstroms zwischen einer Spitze des Vorsprungs und einem der Spitze des Vorsprungs gegenüberliegenden Abschnitt des Messelements zu schaffen. So kann ohne Weiteres ein ausreichend kleiner Messpunkt zum Erfassen der physikalischen Größe der Krafteinwirkung bestimmt werden.

Gemäß einer weiteren Ausführungsform kann die Messvorrichtung zumindest eine der Sensiermasse zugeordnete Gegenkrafteinrichtung aufweisen. Diese Gegenkrafteinrichtung kann u.a. elektrostatisch ausgelegt sein, wobei die notwendigen Kapazitätsflächen so gewählt werden sollten, dass Spannungen im Bereich von vorzugsweise bis zu 5 V verwendet werden. Die Gegenkrafteinrichtung kann ausgebildet sein, um zur Aufrechterhaltung einer vordefinierten Größe des Tunnelstroms eine der Krafteinwirkung entgegen gerichtete Gegenkraft auf die Sensiermasse auszuüben. Die Auswerteeinheit kann entsprechend ausgebildet sein, um die physikalische Größe der Krafteinwirkung basierend auf einer zur Aufrechterhaltung der vordefinierten Größe des Tunnelstroms erforderlichen Größe der Gegenkraft zu bestimmen. Diese Ausführungsform bietet sich für einen Einsatz im geschlossenen Regelkreis an. Sie kann exakte Messergebnisse im Nanometerbereich unter Wahrung eines zum Schutz von Beschädigungen erforderlichen Mindestabstands zwischen Sensiermasse und Messelement liefern.

Beispielsweise kann die Messvorrichtung zumindest eine dem Messelement zugeordnete Elektrode aufweisen. Die Elektrode kann ausgebildet sein, um zur Aufrechterhaltung einer vordefinierten Größe des Tunnelstroms eine Auslenkung des Messelements in Richtung der Sensiermasse oder weg von der Sensiermasse zu bewirken. Entsprechend kann die Auswerteeinheit ausgebildet sein, um die physikalische Größe der Krafteinwirkung basierend auf einem zur Aufrechterhaltung der vordefinierten Größe des Tunnelstroms erforderlichen Grad der Auslenkung und/oder einer zur Aufrechterhaltung der vordefinierten Größe des Tunnelstroms erforderlichen Richtung der Auslenkung zu bestimmen. Diese Ausführungsform bietet sich für einen Einsatz im quasi geschlossenen Regelkreis an und hat den Vorteil, dass aufgrund der geringen Steifigkeit und Masse des Messelements der Energieverbrauch zum Betrieb der Messvorrichtung verringert werden kann.

Gemäß einer weiteren Ausführungsform kann die Messvorrichtung eine Ansteuerschaltung aufweisen. Die Ansteuerschaltung kann ausgebildet sein, um eine Biasspannung zwischen dem Messelement und der zumindest einen Elektrode anzulegen, und zwar insbesondere, um das Messelement in eine Messruhelage auszulenken, in der im Messbetrieb der Messvorrichtung die vordefinierte Größe des Tunnelstroms herrscht. So kann auf einfache und wirkungsvolle Weise sichergestellt werden, dass im ausgeschalteten Zustand der Messvorrichtung keine Beschädigung des Messelements durch eine unbeabsichtigte Bewegung der Sensiermasse auftreten kann.

Gemäß einer weiteren Ausführungsform kann die Messvorrichtung einen relativ zu dem Messelement oder relativ zu der Sensiermasse bewegbaren magnetischen Tunnelkontakt aufweisen. Der Tunnelkontakt kann insbesondere einen ersten Ferromagneten, einen zweiten Ferromagneten und eine zwischen dem ersten Ferromagneten und dem zweiten Ferromagneten angeordnete Isolationsschicht aufweisen. Der magnetische Tunnelkontakt kann sich dabei durch eine Sensitivität gegenüber einem von einem stromdurchflossenen Leiter erzeugen Magnetfeld und/oder einer Änderung eines von einem stromdurchflossenen Leiter erzeugen Magnetfelds auszeichnen. Die vorteilhafte binäre Eigenschaft des Tunnelkontakts, den Tunnelstrom bei Überschreiten einer klar definierbaren Magnetfeldgrenze ein- bzw. auszuschalten, kann eine Robustheit des von der Auswerteeinheit gelieferten Messergebnisses vorteilhaft verbessern. Auch kann das Messergebnis mit dieser Ausführungsform schneller geliefert werden, woraus sich ein vorteilhafter Zeitvorsprung für von dem Messergebnis abhängige Prozesse ergeben kann. Insbesondere kann der stromdurchflossene Leiter in dem Messelement ausgebildet sein. Damit kann auf eine zusätzliche Halterung für den stromdurchflossenen Leiter verzichtet und Kosten und Bauraum gespart werden.

Der magnetische Tunnelkontakt kann an einer dem Messelement zugewandten Seite der Sensiermasse angeordnet sein. Mit dieser Ausführungsform kann die Resonanzfrequenz des Messelements vorteilhaft hoch gehalten werden.

Alternativ kann der magnetische Tunnelkontakt an einer der Sensiermasse zugewandten Seite des Messelements angeordnet sein. Mit dieser Ausführungsform kann eine Unwucht in der Bewegung der Sensiermasse, die das Messergebnis verfälschen könnte, ohne Weiteres verhindert werden.

Gemäß einer weiteren Ausführungsform kann die Messvorrichtung eine Regeleinrichtung zum Regeln des elektrischen Stromflusses durch den stromdurchflossenen Leiter aufweisen. Die Regeleinrichtung kann ausgebildet sein, um mittels einer Veränderung des elektrischen Stromflusses eine Stärke des Magnetfelds einzustellen. Entsprechend kann die Auswerteeinheit ausgebildet sein, um die physikalische Größe der Krafteinwirkung basierend auf einer zur Aufrechterhaltung der vordefinierten Größe des Tunnelstroms erforderlichen Größe der Veränderung des elektrischen Stromflusses zu bestimmen. In dieser Ausführungsform kann die Messvorrichtung ohne ein Auslenken des Messelements betrieben werden. Die Messvorrichtung kann damit energiesparender betrieben werden. Der Wegfall eines Verschleißteils durch das stationäre Messelement kann die Lebensdauer der Messvorrichtung vorteilhaft erhöhen.

Ferner kann der magnetische Tunnelkontakt derart angeordnet sein, dass der in dem magnetischen Tunnelkontakt verursachte Tunnelstrom im Wesentlichen senkrecht zu dem stromdurchflossenen Leiter ausgerichtet ist. Alternativ kann der magnetische Tunnelkontakt derart angeordnet sein, dass der in dem magnetischen Tunnelkontakt verursachte Tunnelstrom im Wesentlichen parallel zu dem stromdurchflossenen Leiter ausgerichtet ist. So kann ohne Weiteres eine sehr sensitive und/oder richtungsempfindliche Auswertung der Bewegung der Sensiermasse gewährleistet werden.

Gemäß einer besonderen Ausführungsform kann eine Funktion des Tunnelkontakts auf dem GMR (Giant Magnetoresistance)-Effekt basieren. Hier können vorteilhafterweise auch mit einem schwachen, also wenig elektrische Energie benötigenden, Magnetfeld sichere Messergebnisse erzielt werden.

Beispielsweise kann das Messelement und/oder die Sensiermasse unter Anwendung zumindest einiger Schritte des Halbleiter-Herstellungsverfahrens, insbesondere eines PS07-Prozesses, hergestellt werden. Wobei es sich insbesondere bei dem sogenannten PS07-Prozess um einen aktuell verwendeten Fertigungsprozess für Inertialsensoren, der kostengünstig eingesetzt werden kann, handelt.

Es wird ferner ein Herstellungsverfahren zum Herstellen einer Messvorrichtung zum Messen einer physikalischen Größe vorgestellt, wobei das Herstellungsverfahren die folgenden Schritte aufweist:
Bereitstellen eines Messelements, das ein elektrisch leitfähiges Material aufweist, einer Sensiermasse, die zumindest teilweise ein elektrisch leitfähiges Material aufweist, und einer Auswerteeinheit; und

Anordnen des Messelements, der Sensiermasse und der Auswerteeinheit derart relativ zueinander, dass die Sensiermasse ausgebildet ist, um ansprechend auf eine Krafteinwirkung relativ zu dem Messelement bewegt zu werden, und die Auswerteeinheit ausgebildet ist, um unter Verwendung eines von einer Position des Messelements gegenüber der Sensiermasse und/oder von einem elektrischen Stromfluss durch das Messelement abhängigen Tunnelstroms eine physikalische Größe der Krafteinwirkung auf die Sensiermasse zu bestimmen.

Das Herstellungsverfahren kann im Rahmen einer computergesteuerten Fertigungsstraße zur kostengünstigen und zeitsparenden Produktion einer Vielzahl der hier vorgestellten Messvorrichtungen ausgeführt werden. Auch durch diese Ausführungsvariante der Erfindung in Form eines Herstellungsverfahrens kann die der Erfindung zugrunde liegende Aufgabe schnell und effizient gelöst werden.

Der hier vorgestellte Ansatz schafft ferner eine Vorrichtung, die ausgebildet ist, um die Schritte einer Variante eines hier vorgestellten Herstellungsverfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird ferner ein Verfahren zum Betreiben einer Messvorrichtung zum Messen einer physikalischen Größe vorgestellt, wobei die Messvorrichtung ein Messelement, das ein elektrisch leitfähiges Material aufweist, eine Sensiermasse, die zumindest teilweise ein elektrisch leitfähiges Material aufweist, wobei die Sensiermasse ausgebildet ist, um ansprechend auf eine Krafteinwirkung relativ zu dem Messelement bewegt zu werden, und eine Auswerteeinheit aufweist, und wobei das Verfahren den folgenden Schritt aufweist:
Bestimmen einer physikalischen Größe der Krafteinwirkung auf die Sensiermasse in der Auswerteeinheit, unter Verwendung eines von einer Position des Messelements gegenüber der Sensiermasse und/oder von einem elektrischen Stromfluss durch das Messelement abhängigen Tunnelstroms.

In diesem Zusammenhang schafft der hier vorgestellte Ansatz ein Steuergerät, das ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 ein Blockschaltbild einer Messvorrichtung zum Messen einer physikalischen Größe, gemäß einem Ausführungsbeispiel der vorliegenden Erfindung;
Fig. 2 eine schematische Darstellung einer Messvorrichtung zum Messen einer physikalischen Größe, gemäß einem weiteren Ausführungsbeispiel der vorliegenden Erfindung;
Fig. 3 eine schematische Darstellung eines Aufbaus der Messvorrichtung aus Fig. 2, gemäß einem Ausführungsbeispiel der vorliegenden Erfindung;
Fig. 4 eine schematische Darstellung einer Messvorrichtung zum Messen einer physikalischen Größe mit Tunnelkontakt, gemäß einem weiteren Ausführungsbeispiel der vorliegenden Erfindung;
Fig. 5 ein Ablaufdiagramm eines Herstellungsverfahrens zum Herstellen einer Messvorrichtung zum Messen einer physikalischen Größe, gemäß einem Ausführungsbeispiel der vorliegenden Erfindung; und
Fig. 6 ein Ablaufdiagramm eines Verfahrens zum Betreiben einer Messvorrichtung zum Messen einer physikalischen Größe, gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

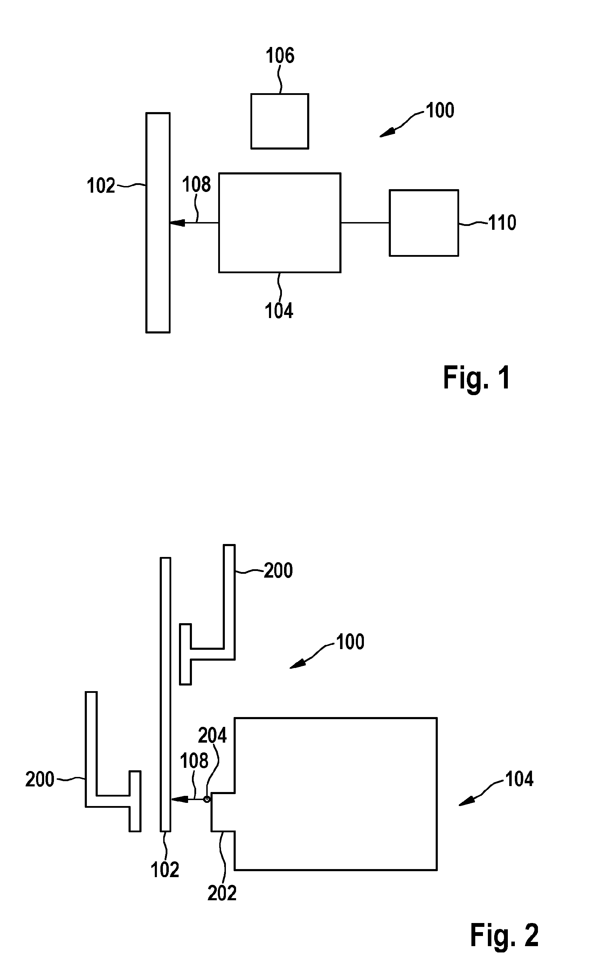

Fig. 1 zeigt ein Blockschaltbild einer Messvorrichtung 100 zum Messen einer physikalischen Größe, gemäß einem Ausführungsbeispiel der vorliegenden Erfindung. Bei dem in Fig. 1 gezeigten Ausführungsbeispiel handelt es sich bei der Messvorrichtung 100 um einen Inertialsensor zum Erfassen einer Drehbewegung und/oder einer Beschleunigung. Die Messvorrichtung 100 umfasst ein Messelement 102, eine Sensiermasse 104 und eine Auswerteeinheit 106. Das Messelement 102 und die Sensiermasse 104 weisen ein elektrisch leitfähiges Material auf und sind durch einen zwischen ihnen angeordneten Nichtleiter getrennt. Bei dem Nichtleiter kann es sich um einen Feststoff, Gas oder Vakuum handeln. Die Sensiermasse 104 ist bewegbar in der Messvorrichtung 100 angeordnet und ausgebildet ist, um ansprechend auf eine auf sie aufgebrachte Krafteinwirkung relativ zu dem Messelement 102 bewegt zu werden. Die Kraft kann in Form einer Drehbeschleunigung und/oder einer linearen Beschleunigung auf die Sensiermasse einwirken. Basierend auf einer zwischen dem Messelement 102 und der Sensiermasse 104 angelegten elektrischen Spannung fließt ein Tunnelstrom 108 zwischen dem Messelement 102 und der Sensiermasse 104. Gemäß Ausführungsbeispielen der Messvorrichtung 100 kann der Tunnelstrom 108 durch eine Position des Messelements 102 gegenüber der Sensiermasse 104 und/oder durch einen elektrischen Stromfluss durch das Messelement 102 geregelt werden. Die Auswerteeinheit 106 ist ausgebildet, um eine physikalische Größe der Krafteinwirkung auf die Sensiermasse 104 zu bestimmen.

Das in Fig. 1 gezeigte Ausführungsbeispiel der Messvorrichtung 100 weist ferner eine der Sensiermasse 104 zugeordnete Gegenkrafteinrichtung 110 auf. Die Gegenkrafteinrichtung 110 ist ausgebildet, um zur Aufrechterhaltung einer vordefinierten Größe des Tunnelstroms 108 eine der Krafteinwirkung entgegen gerichtete Gegenkraft auf die Sensiermasse 104 auszuüben. Entsprechend ist bei dem in Fig. 1 gezeigten Ausführungsbeispiel der Messvorrichtung 100 die Auswerteeinheit 106 ausgebildet, um die physikalische Größe der Krafteinwirkung auf die Sensiermasse 104 basierend auf einer zur Aufrechterhaltung der vordefinierten Größe des Tunnelstroms 108 erforderlichen Größe der Gegenkraft zu bestimmen.

Fig. 2 zeigt eine schematische Darstellung eines weiteren Ausführungsbeispiels der Messvorrichtung 100 zum Messen einer physikalischen Größe. Das in Fig. 2 gezeigte Ausführungsbeispiel der Messvorrichtung weist zwei Elektroden 200 auf, die so angeordnet sind, dass das Messelement 102 zwischen ihnen liegt, wobei je eine der Elektroden 200 auf je einen von zwei Endbereichen des Messelements ausgerichtet ist. Wie die Darstellung zeigt, ist das Messelement 102 länglich und stabförmig, in Form eines Cantilevers, ausgebildet. Je nach Ausführung der Messvorrichtung 100 können die Elektroden 200 in Form von Plattenkondensatoren oder Kammkondensatoren vorliegen. Die Elektroden 200 sind ausgebildet, um eine elektrostatische Anziehung bzw. Abstoßung auf die ihnen gegenüberliegenden Abschnitte des Messelements 102 auszuüben und auf diese Weise das Messelement 102 in Richtung der Sensiermasse 104 oder weg von der Sensiermasse 104 geeignet auszulenken.

Wie die Darstellung in Fig. 2 zeigt, weist die Sensiermasse 104 einen dem Messelement 102 zugewandten Vorsprung 202 auf. Der Vorsprung kann die Form einer Wölbung oder Ausbuchtung aufweisen und bildet den Abschnitt der Sensiermasse 104 mit dem kürzesten Abstand zu dem Messelement 102. Auf diese Weise wird eine Bahn für einen Fluss des Tunnelstroms 108 zwischen einer Spitze des Vorsprungs 202 und einem der Spitze des Vorsprungs 202 gegenüberliegenden Abschnitt des Messelements 102 festgelegt und örtlich begrenzt.

Die Funktionalität des in Fig. 2 gezeigten Ausführungsbeispiels der Messvorrichtung 100 basiert auf einer Aufrechterhaltung einer vordefinierten Größe des Tunnelstroms 108. Entsprechend ist die - hier nicht gezeigte-Auswerteeinheit ausgebildet, um auf der Grundlage eines zur Aufrechterhaltung der vordefinierten Größe des Tunnelstroms 108 mittels der Elektroden 200 bewirkten Grads der Auslenkung und/oder einer zur Aufrechterhaltung der vordefinierten Größe des Tunnelstroms 108 mittels der Elektroden 200 bewirkten Richtung der Auslenkung des Messelements 102 die physikalische Größe der Krafteinwirkung auf die Sensiermasse 104, also die Sensiergröße, zu bestimmen.

Die in Fig. 2 gezeigte exemplarische Messvorrichtung 100 weist ferner eine - in der Darstellung nicht gezeigte - Ansteuerschaltung auf. Die Ansteuerschaltung ist ausgebildet, um eine Biasspannung zwischen dem Messelement 102 und den Elektroden 200 anzulegen. Damit wird das Messelement 102 in eine in der Darstellung in Fig. 2 gezeigte Messruhelage ausgelenkt, in der im Messbetrieb der Messvorrichtung 100 die vordefinierte Größe des Tunnelstroms 108 herrscht.

Auch bei dem in Fig. 2 gezeigten Ausführungsbeispiel ist die Messvorrichtung 100 als ein Inertialsensor mit Tunnelstrom-Auswertung ausgebildet. In der Auswertung des Inertialsensors 100 bietet sich zur Erschließung der Sensiergröße sowohl ein Verfahren im geschlossenen Regelkreis bzw. ein Closed-Loop-Verfahren als auch ein Verfahren im quasi geschlossenen Regelkreis bzw. ein Quasi-Closed-Loop-Verfahren an.

Das Prinzip des Closed-Loop-Verfahrens basiert auf der aus der Rastertunnelmikroskopie bekannten Auswertung des Tunnelstroms 108. Der Tunnelstrom 108 ist extrem abstandssensitiv in der Größenordnung von einem Nanometer. Damit kann mit diesem Verfahren extrem sensitiv die Bewegung der Sensiermasse 104 ausgelesen werden. Eine Integration in heutige Prozesse ist problemlos und ohne größeren Aufwand möglich. Die Implementierung des in Fig. 2 gezeigten Ausführungsbeispiels der Messvorrichtung 100 ermöglicht direktes Tunneln zwischen der Sensiermasse 104 und dem Messelement 102. Zwischen der Sensiermasse 104 und dem Messelement bzw. Cantilever 102 liegt eine Spannung an, sodass der Tunnelstrom 108 fließen kann. Eine Kraft, sei es basierend auf Beschleunigung oder Coriolis, wirkt an der Sensiermasse 104 und verschiebt diese nach links in Richtung Cantilever 102. Damit ändert sich der Abstand zwischen Sensiermasse 104 und Cantilever 102 und der Tunnelstrom 108 nimmt exponentiell zu.

Im Gegensatz zur Rastertunnelmikroskopie, wo eine laterale Auflösung einer Topografie das Ziel ist, braucht bei dem hier gezeigten Konzept die Position der Spitze des Vorsprungs 202, an der der Tunnelstrom 108 auftritt, nicht im atomaren Bereich definiert zu sein. Damit lässt sich eine schwer herstellbare Spitze vermeiden und eine wohldefinierte, flächige, Ausbuchtung 202 der Sensiermasse 104 ist ausreichend, um einen Messpunkt 204 der Sensiermasse 104 zu definieren. Die Ausbuchtung 202 ist vorteilhaft aber nicht zwingend notwendig. Ausreichend sind im Endeffekt schon zwei planparallele Platten. Gemäß Ausführungsbeispielen ist auch eine Realisierung mit mehreren Messpunkten204 möglich. Der Tunnelstrom 108 ist so sensitiv, dass er nur an einer Stelle, der auf atomarem Maßstab kürzesten Verbindung zwischen Messelement 102 und Sensiermasse 104, auftritt. Damit ist die Zuverlässigkeit der Messvorrichtung 100 nach einem mechanischen Kontakt beider Oberflächen gegeben.

Da bei moderaten Spannungen im Voltbereich der Tunnelstrom 108 auf einen sehr begrenzten Abstandsbereich um einen Nanometer beschränkt ist, ist es vorteilhaft, den Sensor 100 in einer Closed-Loop-oder Quasi-Closed-Loop-Konfiguration zu betreiben. Dabei wird der Abstand zwischen Messelement 102 und Sensiermasse 104 und damit der Tunnelstrom 108 festgelegt. Im Closed-Loop-Auswerteverfahren wird die Kraft, die auf die Sensiermasse 104 wirkt, durch eine entsprechend geregelte Gegenkraft kompensiert. Heutige Drehratesensoren werden meist in der Closed-Loop-Konfiguration betrieben. Der Regelkreis ist so eingestellt, dass die Masse 104 in einem Fangbereich von 1 bis 10 Nanometer bewegt wird.

Im Quasi-Closed-Loop-Auswerteverfahren wird der Cantilever 102 aufgrund der Verschiebung der Sensiermasse 104 mittels der Elektroden 200 entsprechend verbogen. Gemäß Ausführungsbeispielen können beide Konfigurationen gleichzeitig verwendet werden. Insbesondere die Quasi-Closed-Loop-Konfiguration zeichnet sich dadurch aus, dass aufgrund der geringeren Masse und Steifigkeit des Cantilevers 102 der Stromverbrauch einen Bruchteil der Closed-Loop-Konfiguration beträgt. Zudem ist die Resonanzfrequenz des Cantilevers 102 höher, womit sich eine schnellere und aggressivere Regelung der Messvorrichtung betreiben lässt.

Ein Kernelement des Sensors 100 ist der Cantilever 102. Er ist aus einem Material gebildet, das ausreichend weich ist, sodass ein mechanischer Kontakt zwischen Messelement 102 und Sensiermasse 104 zu keinem Schaden führt. Denn es ist trotz steigender Vibrationsrobustheit mit einem mechanischen Kontakt zu rechnen. Außerdem lässt sich ein weicher Cantilever 102 leichter und mit geringeren Spannungen und daraus resultierend geringeren Leistungen elektrostatisch durch die Elektroden 200 bewegen. Auf der anderen Seite ist der Cantilever 102 dadurch gekennzeichnet, dass seine Resonanzfrequenz ausreichend hoch ist, damit ein schnelles Regeln möglich und eine Vibrationsunempfindlichkeit gegeben ist. Dies ist gerade bei mikrosystemtechnischen Implementierungen der Messvorrichtung 100 im Mikrometermaßstab gegeben, beispielsweise beim AFM-Cantilever. Damit die Masse des Cantilevers 102 gering und die Resonanzfrequenz hoch bleibt, ist gemäß dem in Fig. 2 gezeigten Ausführungsbeispiel der Messvorrichtung 100 die Ausbuchtung 202 an der Sensiermasse 104 angebracht.

Die beiden Elektroden 200, die die Position des Cantilevers 102 festlegen, können, für kleine Stellwege, als Plattenkondensatoren, oder, für große Stellwege, als Kammkondensatoren ausgelegt sein. Gemäß Ausführungsbeispielen kann sich die Position der Elektroden 200 über eine gesamte Länge des Cantilevers 102 erstrecken. Bevorzugt sitzen die Elektroden 200 jedoch, wie in Fig. 2 beispielhaft gezeigt, an je einem Ende des Cantilevers 102.

Da es eine große Herausforderung darstellt, einen Gap bzw. Abstand im Nanometerbereich zwischen dem Cantilever 102 und der Sensiermasse 104 herzustellen, kann gemäß Ausführungsbeispielen ein initialer Gap zwischen beiden ausreichend weit gewählt werden. Über die mittels der Elektroden 200 angelegte Biasspannung wird der Cantilever 102 im Betreibsmodus der Messvorrichtung 100 in seinen Arbeitsbereich an die Sensiermasse 104 gezogen. Dies hat den zusätzlichen Vorteil, dass bei einem Abschalten des Sensors 100 und damit der Regelung der Cantilever 102 in eine sichere Entfernung zur Masse 104 zurückkehrt.

Ein großer Vorteil der in Fig. 2 gezeigten Konfiguration der Messvorrichtung 100 besteht darin, dass sie in dem PSO7-MEMS-Prozess zur Herstellung von Inertialsensoren umsetzbar ist. Für eine Abdeckung der drei Raumrichtungen sind in-plane- und out-of-plane-Auswertungen, also Auswertungen in der Ebene und aus der Ebene heraus, notwendig. In diesem Fertigungsprozess stehen drei elektrisch und teilweise mechanisch aktive Schichten zur Verfügung. In diesem Fertigungsprozess bezeichnen VP und FP elektrisch leitende strukturierte PolySilizium-Schichten. Die mit EPI bezeichnete Schicht ist hier wie die beiden anderen Schichten aus PolySilizium und damit elektrisch leitend und strukturierbar. Zusätzlich ist sie vergleichsweise dicker und bietet sich damit an, die Sensiermasse darzustellen. Diese drei Schichten sind jeweils durch Siliziumdioxid-Schichten voneinander elektrisch und mechanisch isoliert. Die Schichten werden nacheinander abgeschieden und strukturiert. Im finalen Schritt wird durch einen sogenannten Opferschichtprozess das Siliziumdioxid zumindest partiell entfernt, um die Schichten mechanisch freizustellen und Bewegungen zuzulassen.

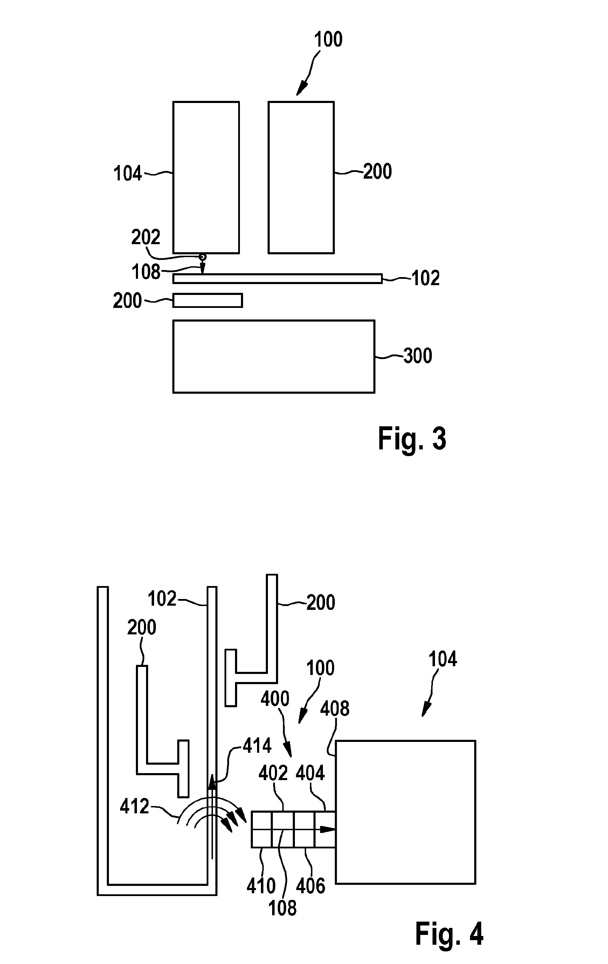

Fig. 3 zeigt entsprechend eine schematische Darstellung eines beispielhaften Aufbaus der Messvorrichtung 100 aus Fig. 2 bei einer Herstellung gemäß dem PSO7-MEMS-Prozess. Bei dem in Fig. 3 gezeigten beispielhaften Aufbau ist der MEMS-Inertialsensor 100 auf einem Substrat 300 aufgebaut. Auf dem Substrat 300, das die Basis der Messvorrichtung 100 bildet, ist eine der zwei Elektroden 200 angeordnet. Über der Elektrode 200 befindet sich der Cantilever 102. Oberhalb des Cantilevers 102 befinden sich nebeneinander die Sensiermasse 104 und die zweite Elektrode 200. Der Tunnelstrom 108 fließt zwischen dem Vorsprung 202 der Sensiermasse 104 und einem dem Vorsprung 202 gegenüberliegenden Abschnitt des Messelements 102 am geringsten Gap zwischen Sensiermasse 104 und Messelement 102.

Bei dem in Fig. 3 gezeigten Ausführungsbeispiel der Messvorrichtung 100 bilden die in der Darstellung untere Elektrode 200 die VP-Schicht, der Cantilever 102 die FP-Schicht und die Sensiermasse 104 und die über einen Graben von der Sensiermasse 104 getrennte, in der Darstellung obere, Elektrode 200 die EPI-Schicht des MEMS-Sensors 100. Hierbei wird auf das zuvor Genannte, speziell in Bezug auf die EPI-Schicht verwiesen. Der in Fig. 3 gezeigten beispielhafte Aufbau der Messvorrichtung 100 ermöglicht die Integration der out-of-plane-Detektion in einen bestehenden PSO7-Prozess. Vorteilhaft an dem in Fig. 3 gezeigten Ausführungsbeispiel ist, dass out-of-plane-Bewegungen durch die Verwendung der FP-Schicht als Cantilever 102 dargestellt werden können. Gemäß Ausführungsbeispielen kann, für definiertes Tunneln, durch eine geschickte Strukturierung der Opferoxidschichten eine Topografie mit Ausbuchtungen erzeugt werde. Dies ist bei dem in Fig. 3 gezeigten Ausführungsbeispiel nicht gezeigt.

Fig. 4 zeigt anhand einer weiteren schematischen Darstellung ein weiteres Ausführungsbeispiel der Messvorrichtung 100 zum Messen einer physikalischen Größe. Der Aufbau des in Fig. 4 gezeigten Ausführungsbeispiels gleicht dem in Fig. 2 gezeigten, mit dem Unterschied, dass hier ferner einer Tunnelkontakt 400 zum Einsatz kommt. Der Tunnelkontakt 400 weist einen ersten Ferromagneten 402, einen zweiten Ferromagneten 404 und eine zwischen dem ersten Ferromagneten 402 und dem zweiten Ferromagneten 404 angeordnete Isolationsschicht 406 auf und ist bei dem in Fig. 4 gezeigten Ausführungsbeispiel der Messvorrichtung 100 Tunnelkontakt an einer dem Messelement 102 zugewandten Seite 408 der Sensiermasse 104 angeordnet. Ein an den ersten Ferromagneten 402 angrenzender Kontakt 410 stellt eine obere Zuleitung für eine Stromversorgung des Tunnelkontakts 400 dar. Eine untere Zuleitung für den Tunnelkontakt wird direkt über die Seite 408 der Sensiermasse 104 bereitgestellt, die den zweiten Ferromagneten 404 kontaktiert.

Zur Bereitstellung eines - in der Darstellung in Fig. 4 mittels beispielhaft gebogenen Richtungspfeilen gekennzeichneten - Magnetfelds 412 für den Tunnelkontakt ist ein in der Darstellung mittels eines weiteren Richtungspfeils gekennzeichneter stromdurchflossener Leiter 414 in die Messvorrichtung 100 integriert. Bei dem in Fig. 4 gezeigten Ausführungsbeispiel der Messvorrichtung 100 ist der stromdurchflossene Leiter 414 in dem Messelement 102 ausgebildet. Gemäß alternativen Ausführungsbeispielen kann der stromdurchflossene Leiter 414 auch getrennt von dem Messelement 102 in der Nähe des Tunnelkontakts 400 in dem Sensor 100 angeordnet und beispielsweise mittels einer Halterung befestigt sein. Der Tunnelkontakt 400 ist sensitiv gegenüber dem von dem stromdurchflossenen Leiter 414 erzeugten Magnetfeld 412 und/oder einer Änderung des von dem stromdurchflossenen Leiter 414 erzeugten Magnetfelds 412. Basierend auf einer Stärke des in der Nähe des Tunnelkontakts 400 wirkenden Magnetfelds 412 und/oder einer Entfernung des Tunnelkontakts 400 von dem Magnetfeld 412 fließt der Tunnelstrom 108 durch die Schichten 402, 406, 404 des Tunnelkontakts 400.

Zum Regeln eines elektrischen Stromflusses durch den stromdurchflossenen Leiter 414 weist das in Fig. 4 gezeigte Ausführungsbeispiel der Messvorrichtung 100 eine - in der Darstellung nicht gezeigte - Regeleinrichtung auf. Die Regeleinrichtung ist ausgebildet, um mittels einer Veränderung des elektrischen Stromflusses eine Stärke des Magnetfelds 412 einzustellen. Die - ebenfalls in Fig. 4 nicht gezeigte - Auswerteeinheit ist ausgebildet, um die physikalische Größe der Krafteinwirkung auf die Sensiermasse 104 basierend auf einer zur Aufrechterhaltung einer vordefinierten Größe des Tunnelstroms 108 erforderlichen Größe der Veränderung des elektrischen Stromflusses in dem Leiter 414 zu bestimmen.

Bei dem in Fig. 4 gezeigten exemplarischen Inertialsensor 100 ist der Tunnelkontakt 400 an der Sensiermasse 104 angeordnet, sodass der Tunnelkontakt 400 zur Messwertaufnahme relativ zu dem Messelement 102 bewegt wird. Gemäß einem alternativen Ausführungsbeispiel kann der Tunnelkontakt 400 an dem Messelement 102 angeordnet und damit relativ zu der Sensiermasse 104 bewegbar sein.

Ferner ist bei dem in Fig. 4 gezeigten Ausführungsbeispiel der magnetische Tunnelkontakt 400 so an der dem Cantilever 102 zugewandten Seite 408 der Sensiermasse 104 angeordnet, dass der in dem magnetischen Tunnelkontakt 400 verursachte Tunnelstrom 108 im Wesentlichen senkrecht zu dem stromdurchflossenen Leiter 414 ausgerichtet ist. Gemäß einem in den Figuren nicht gezeigten alternativen Ausführungsbeispiel kann der magnetische Tunnelkontakt 400 derart angeordnet ist, dass der durch ihn fließende Tunnelstrom 108 im Wesentlichen parallel zu dem stromdurchflossenen Leiter 414 ausgerichtet ist.

Bei dem in Fig. 4 gezeigten exemplarischen Inertialsensor 100 erfolgt die Auswertung der auf die Sensiermasse 104 einwirkenden physikalischen Größe basierend auf dem in dem magnetischen Tunnelkontakt 400 auftretenden und von dem Tunnelstrom 108 abhängigen magnetoresistiven Effekt bzw. TMR-Effekt (TMR = tunnel magnetoresistance). Gemäß alternativen Ausführungsbeispielen kann eine Funktion des Tunnelkontakts 400 auch auf dem Riesenmagnetowiderstand bzw. GMR-Effekt (GMR = giant magnetoresistance) basieren.

Mit der Ausnutzung des TMR-Effekts bzw. GMR-Effekts kann eine noch flexibler einstellbare Auswertemethode der Messvorrichtung 100 realisiert werden. Hierbei wird anstelle des Tunnelstroms 108 zwischen den beiden Oberflächen des Messelements 102 und der Sensiermasse 104 der Tunnelstrom bzw. Strom 108 durch das TMR- bzw. GMR-Element 400 gemessen. Der Tunnelstrom 108 ist sensitiv auf das Magnetfeld 412, welches u. a. durch den Stromfluss durch den Leiter 414 in einem definierten Abstand zum Tunnelkontakt 400 eingestellt wird. Damit ist es u. a. auch möglich, die Abstandssensitivität der Sensiermasse 104 von dem unbeschleunigten stromdurchflossenen Leiter 414 über den Stromfluss einzustellen.

Über den TMR-Effekt kann die extreme Abstandssensitivität des anhand der Figuren 1 bis 3 erläuterten direkten Tunnelstroms aufgeweitet werden. Der zum Magnetfeld 412 extrem sensitive magnetische Tunnelwiderstand TMR des Tunnelkontakts 400 ist durch seine besondere binäre Eigenschaft gekennzeichnet, den Tunnelstrom 108 bei Überschreiten einer vordefinierten Magnetfeldgrenze des Magnetfelds 412 regelrecht zu schalten. Um die durch Beschleunigung und/oder Rotation erzeugte Bewegung bzw. Abstandsänderung der Sensiermasse 104 zu detektieren, dient der stromdurchflossene Leiter 414 als Quelle des Magnetfeldes 412. Es sind auch alternative Stromquellen denkbar.

Bei dem in Fig. 4 gezeigten Ausführungsbeispiel der Messvorrichtung 100 mit Tunnelkontakt 400 ist der TMR-Schichtstapel 402, 406, 404 auf der Sensiermasse 104 aufgebracht. Das Magnetfeld 412 wird durch den stromdurchflossenen Leiter 414 in unmittelbarer Nähe erzeugt. Das Magnetfeld 412 ändert den elektrischen Widerstand durch den TMR-Schichtstapel 402, 406, 404. Um ein Feedback für eine Regelung im Closed-Loop bzw. Quasi-Closed-Loop zu ermöglichen, ist der Cantilever 102 über die durch die Elektroden 200 bewirkte elektrostatische Auslenkung bewegbar. Die Regelung kann aber auch zusätzlich bzw. ausschließlich auf eine Regelung des Stroms des stromdurchflossenen Leiters 414 zurückgreifen. Damit wären hierfür keine beweglichen Teile mehr notwendig. In diesem Zusammenhang gilt zusätzlich, dass eine Fixierung des stromdurchflossenen Leiters 414 an der Halterung und die Befestigung der TMR-Schichten 402, 406, 404 an der Sensiermasse 104 nicht zwingend notwendig ist. Auch eine umgekehrte Ausführung ist denkbar.

Bezüglich der TMR-Schichten 402, 406, 404 ist es im Gegensatz zum reinen Tunneln auch möglich, über einen vertikal aufgebauten magnetischen Tunnelkontakt 400 horizontale Bewegungen zu erkennen. Dies ist möglich, da sich die Magnetfeldlinien 412 radial um den Leiter 414 ausdehnen. So lassen sich mit einer TMR-Funktionsebene, mit horizontal unabhängigen TMR-Sensoren, abhängig von der Position horizontale und auch vertikale Bewegungen detektieren. Das binäre magnetsensitive Verhalten des magnetischen Tunnelwiderstands kann vorteilhaft in der Feedbackloop- bzw. Rückkopplungsregelung und in der Closed-Loop- bzw. Quasi-Closed-Loop-Regelung eingesetzt werden. Durch eine definierte Frequenz im Wechselstrom des stromdurchflossenen Leiters 414 lässt sich das TMR-Signal besonders rauscharm, z. B. per Lock-in-Verstärker, auslesen. Der Abstand. bzw. die Amplitude des Stroms im durchflossenen Leiter 414 als Regelgröße schlägt sich im Verhältnis niedriger zu hoher TMR-Tunnelstrom 108 nieder. Um die Sensitivität des Systems 100 weiter zu erhöhen, können gemäß Ausführungsbeispielen zudem mehrere TMR-Elemente 400 in Serie oder parallel geschaltet werden. Das in Fig. 4 anhand des TM R-Effekts erläuterte Auswertekonzept zur Beschleunigungs- und/oder Drehzahlmessung kann auf identische Weise auch mit einem GMR-Schichtsystem realisiert werden.

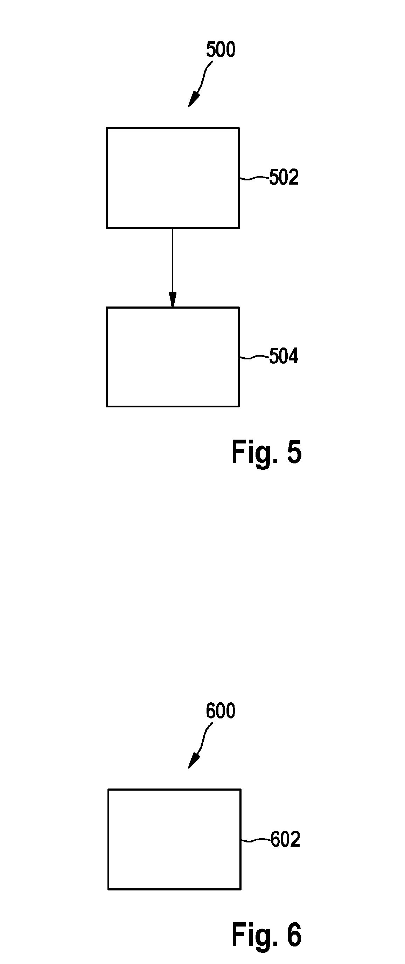

Fig. 5 zeigt ein Ablaufdiagramm eines Ausführungsbeispiels eines Herstellungsverfahrens 500 zum Herstellen einer Messvorrichtung zum Messen einer physikalischen Größe. Das Herstellungsverfahren 500 kann zum Herstellen eines Inertialsensors wie in den Figuren 1 bis 4 gezeigt ausgeführt werden. In einem Schritt 502 werden ein ein elektrisch leitfähiges Material aufweisendes Messelement, eine ebenfalls ein elektrisch leitfähiges Material aufweisende Sensiermasse und eine Auswerteeinheit zum Auswerten der physikalischen Größe bereitgestellt. In einem Schritt 504 werden das Messelement, die Sensiermasse und die Auswerteeinheit derart relativ zueinander angeordnet, dass die Sensiermasse ansprechend auf eine Krafteinwirkung auf dieselbe relativ zu dem Messelement bewegt wird und die Auswerteeinheit unter Verwendung eines von einer Position des Messelements gegenüber der Sensiermasse und/oder von einem elektrischen Stromfluss durch das Messelement abhängigen Tunnelstroms eine Bestimmung der physikalischen Größe der Krafteinwirkung auf die Sensiermasse vornimmt.

Fig. 6 zeigt ein Ablaufdiagramm eines Verfahrens 600 zum Betreiben einer Messvorrichtung zum Messen einer physikalischen Größe, gemäß einem Ausführungsbeispiel der vorliegenden Erfindung. Das Verfahren 600 kann in einem Inertialsensor wie in den Figuren 1 bis 4 gezeigt zum Messen einer physikalischen Größe einer Krafteinwirkung auf eine Sensiermasse des Sensors ausgeführt werden. In einem Schritt 602 wird unter Verwendung eines von einer Position eines Messelements des Sensors gegenüber der Sensiermasse und/oder von einem elektrischen Stromfluss durch das Messelement abhängigen Tunnelstroms die physikalische Größe der Krafteinwirkung auf die Sensiermasse in einer Auswerteeinheit der Messvorrichtung bestimmt.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Messvorrichtung (100) zum Messen einer physikalischen Größe, wobei die Messvorrichtung (100) die folgenden Merkmale aufweist:
ein Messelement (102), das ein elektrisch leitfähiges Material aufweist;
eine Sensiermasse (104), die zumindest teilweise ein elektrisch leitfähiges Material aufweist, wobei die Sensiermasse (104) ausgebildet ist, um ansprechend auf eine Krafteinwirkung relativ zu dem Messelement (102) bewegt zu werden; und
eine Auswerteeinheit (106), die ausgebildet ist, um unter Verwendung eines von einer Position des Messelements (102) gegenüber der Sensiermasse (104) und/oder von einem elektrischen Stromfluss durch das Messelement (102) abhängigen Tunnelstroms (108) eine physikalische Größe der Krafteinwirkung auf die Sensiermasse (104) zu bestimmen.

2. Messvorrichtung (100) gemäß Anspruch 1, **dadurch gekennzeichnet, dass** die Sensiermasse (104) einen dem Messelement (102) zugewandten Vorsprung (202) aufweist, insbesondere wobei der Vorsprung (202) ausgebildet ist, um eine vordefinierte Bahn des Tunnelstroms (108) zwischen einer Spitze des Vorsprungs (202) und einem der Spitze des Vorsprungs (202) gegenüberliegenden Abschnitt des Messelements (102) zu schaffen.

3. Messvorrichtung (100) gemäß einem der vorangegangenen Ansprüche, **dadurch gekennzeichnet, dass** die Messvorrichtung (100) zumindest eine der Sensiermasse (104) zugeordnete Gegenkrafteinrichtung (110) aufweist, die ausgebildet ist, um zur Aufrechterhaltung einer vordefinierten Größe des Tunnelstroms (108) eine der Krafteinwirkung entgegen gerichtete Gegenkraft auf die Sensiermasse (104) auszuüben, und wobei die Auswerteeinheit (106) ausgebildet ist, um die physikalische Größe der Krafteinwirkung basierend auf einer zur Aufrechterhaltung der vordefinierten Größe des Tunnelstroms (108) erforderlichen Größe der Gegenkraft zu bestimmen.

4. Messvorrichtung (100) gemäß einem der vorangegangenen Ansprüche, **dadurch gekennzeichnet, dass** die Messvorrichtung (100) zumindest eine dem Messelement (102) zugeordnete Elektrode (200) aufweist, die ausgebildet ist, um zur Aufrechterhaltung einer vordefinierten Größe des Tunnelstroms (108) eine Auslenkung des Messelements (102) in Richtung der Sensiermasse (104) oder weg von der Sensiermasse (104) zu bewirken, wobei die Auswerteeinheit (106) ausgebildet ist, um die physikalische Größe der Krafteinwirkung basierend auf einem zur Aufrechterhaltung der vordefinierten Größe des Tunnelstroms (108) erforderlichen Grad der Auslenkung und/oder einer zur Aufrechterhaltung der vordefinierten Größe des Tunnelstroms (108) erforderlichen Richtung der Auslenkung zu bestimmen.

5. Messvorrichtung (100) gemäß Anspruch 3 oder 4, **dadurch gekennzeichnet, dass** die Messvorrichtung (100) eine Ansteuerschaltung aufweist, die ausgebildet ist, um eine Biasspannung zwischen dem Messelement (102) und der zumindest einen Elektrode (200) anzulegen, insbesondere, um das Messelement (102) in eine Messruhelage auszulenken, in der im Messbetrieb der Messvorrichtung (100) die vordefinierte Größe des Tunnelstroms(108) herrscht.

6. Messvorrichtung (100) gemäß einem der vorangegangenen Ansprüche, **dadurch gekennzeichnet, dass** die Messvorrichtung (100) einen relativ zu dem Messelement (102) oder relativ zu der Sensiermasse (104) bewegbaren magnetischen Tunnelkontakt (400) aufweist, insbesondere der einen ersten Ferromagneten (402), einen zweiten Ferromagneten (404) und eine zwischen dem ersten Ferromagneten (402) und dem zweiten Ferromagneten (404) angeordnete Isolationsschicht (406) aufweist, insbesondere wobei der magnetische Tunnelkontakt (400) sensitiv gegenüber einem von einem stromdurchflossenen Leiter (414) erzeugten Magnetfeld (412) und/oder einer Änderung eines von einem stromdurchflossenen Leiter (414) erzeugten Magnetfelds (412) ist, insbesondere wobei der stromdurchflossene Leiter (414) in dem Messelement (102) ausgebildet ist.

7. Messvorrichtung (100) gemäß Anspruch 6, **dadurch gekennzeichnet, dass** der magnetische Tunnelkontakt (400) an einer dem Messelement (102) zugewandten Seite (408) der Sensiermasse (104) angeordnet ist oder an einer der Sensiermasse (104) zugewandten Seite des Messelements (102) angeordnet ist.

8. Messvorrichtung (100) gemäß Anspruch 6 oder 7, **dadurch gekennzeichnet, dass** die Messvorrichtung (100) eine Regeleinrichtung zum Regeln des elektrischen Stromflusses durch den stromdurchflossenen Leiter (414) aufweist, wobei die Regeleinrichtung ausgebildet ist, um mittels einer Veränderung des elektrischen Stromflusses eine Stärke des Magnetfelds (412) einzustellen, und wobei die Auswerteeinheit (106) ausgebildet ist, um die physikalische Größe der Krafteinwirkung basierend auf einer zur Aufrechterhaltung der vordefinierten Größe des Tunnelstroms (108) erforderlichen Größe der Veränderung des elektrischen Stromflusses zu bestimmen.

9. Messvorrichtung (100) gemäß einem der Ansprüche 6 bis 8, **dadurch gekennzeichnet, dass** der magnetische Tunnelkontakt (400) derart angeordnet ist, dass der in dem magnetischen Tunnelkontakt (400) verursachte Tunnelstrom (108) im Wesentlichen senkrecht zu dem stromdurchflossenen Leiter (414) ausgerichtet ist, oder dass der magnetische Tunnelkontakt (400) derart angeordnet ist, dass der in dem magnetischen Tunnelkontakt (400) verursachte Tunnelstrom (108) im Wesentlichen parallel zu dem stromdurchflossenen Leiter (414) ausgerichtet ist.

10. Messvorrichtung (100) gemäß einem der Ansprüche 6 bis 9, **dadurch gekennzeichnet, dass** eine Funktion des Tunnelkontakts (400) auf dem GMR-Effekt basiert.

11. Messvorrichtung (100) gemäß einem der vorangegangenen Ansprüche, **dadurch gekennzeichnet, dass** das Messelement (102) und/oder die Sensiermasse (104) unter Anwendung zumindest eines Schrittes eines Halbleiter-Herstellungsverfahrens, insbesondere eines PSO7-Prozesses, hergestellt wurden.

12. Herstellungsverfahren (500) zum Herstellen einer Messvorrichtung (100) zum Messen einer physikalischen Größe, wobei das Herstellungsverfahren (500) die folgenden Schritte aufweist:
Bereitstellen (502) eines Messelements (102), das ein elektrisch leitfähiges Material aufweist, einer Sensiermasse (104), die zumindest teilweise ein elektrisch leitfähiges Material aufweist, und einer Auswerteeinheit (106); und
Anordnen (504) des Messelements (102), der Sensiermasse (104) und der Auswerteeinheit (106) derart relativ zueinander, dass die Sensiermasse (104) ausgebildet ist, um ansprechend auf eine Krafteinwirkung relativ zu dem Messelement (102) bewegt zu werden, und die Auswerteeinheit (106) ausgebildet ist, um unter Verwendung eines von einer Position des Messelements (102) gegenüber der Sensiermasse (104) und/oder von einem elektrischen Stromfluss durch das Messelement (102) abhängigen Tunnelstroms (108) eine physikalische Größe der Krafteinwirkung auf die Sensiermasse (104) zu bestimmen.

13. Verfahren (600) zum Betreiben einer Messvorrichtung (100) zum Messen einer physikalischen Größe, wobei die Messvorrichtung (100) ein Messelement (102), das ein elektrisch leitfähiges Material aufweist, eine Sensiermasse (104), die zumindest teilweise ein elektrisch leitfähiges Material aufweist, wobei die Sensiermasse (104) ausgebildet ist, um ansprechend auf eine Krafteinwirkung relativ zu dem Messelement (102) bewegt zu werden, und eine Auswerteeinheit (106) aufweist, und wobei das Verfahren (600) den folgenden Schritt aufweist:
Bestimmen (602) einer physikalischen Größe der Krafteinwirkung auf die Sensiermasse (104), unter Verwendung eines von einer Position des Messelements (102) gegenüber der Sensiermasse (104) und/oder von einem elektrischen Stromfluss durch das Messelement (102) abhängigen Tunnelstroms (108).

14. Computerprogramm, das dazu eingerichtet ist, alle Schritte eines Verfahrens (600) gemäß Anspruch 13 durchzuführen.

15. Maschinenlesbares Speichermedium mit einem darauf gespeicherten Computerprogramm nach Anspruch 14.
